(19)

**Europäisches Patentamt**
**European Patent Office**
**Office européen des brevets**

(11) **EP 4 575 915 A1**

(12) **EUROPEAN PATENT APPLICATION**

(43) Date of publication:
**25.06.2025  Bulletin 2025/26**

(21) Application number: **23220192.1**

(22) Date of filing: **22.12.2023**

(51) International Patent Classification (IPC):
**G06N 5/01** *(2023.01)*

(52) Cooperative Patent Classification (CPC):
**G06N 5/01;** G06N 10/60

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Quantumz.io Sp. z o.o.**
**02-566 Warszawa (PL)**

(72) Inventors:
• **Gardas, Bartlomiej Jerzy**
**40-553 Katowice (PL)**
• **Hendzel, Kamil Piotr**
**05-500 Piaseczno (PL)**

(74) Representative: **JD&P Patent Attorneys**
**Joanna Dargiewicz & Partners**
**ul. Mysliborska 93A/50**
**03-185 Warszawa (PL)**

(54) **SOLVER FOR SOLVING DISCRETE OPTIMIZATION PROBLEMS ENCODED USING THE ISING MODEL**

(57)    The present invention relates to a hybrid algorithm, also known as a solver, for solving discrete optimization problems encoded using the Ising model, which is known to be equivalent to the Quadratic Unconstrained Binary Optimization problem (QUBO problem). The invention can be implemented using both classic computing resources (CPU - Central Processing Unit, GPU - Graphics Processing Unit) or quantum computations (QPU - Quantum Processing Unit).

EP 4 575 915 A1

**Description**

The present invention relates to a hybrid algorithm, also known as a solver, for solving discrete optimization problems encoded using the Ising model, which is known to be equivalent to the Quadratic Unconstrained Binary Optimization problem (QUBO problem).

The invention can be implemented using both classic computing resources (CPU - Central Processing Unit, GPU - Graphics Processing Unit) or quantum computations (QPU - Quantum Processing Unit).

**Field of invention**

The invention lies in the field of mathematical optimization, and namely relates to a solver suitable for solving a class of optimization problems.

**State of the art**

European patent application EP4290416A1 discloses an apparatus of acquiring a solution to a permutation optimization problem represented by an energy function of an Ising model, the apparatus being configured to perform processing including: obtaining problem information which indicates $M^2$ state variables (M is an integer equal to or more than 3) in the permutation optimization problem; generating information on a first energy function which includes $N^2$ state variables obtained by adding ($N^2 - M^2$) state variables (N is an integer greater than M) to the $M^2$ state variables, based on the problem information; inputting the information on the first energy function to a search unit; obtaining, from the search unit based on the first energy function, a first solution represented by values of the $N^2$ state variables; and generating a second solution to the permutation optimization problem by removing values of the ($N^2 - M^2$) state variables from the first solution.

European patent application EP4055533A1 discloses A computer (such as a classical computer, a quantum computer, or a hybrid quantum-classical computer) which performs PDE-constrained optimization of problems in cases in which, for a fixed $\vec{w}$, there is an explicit expression for $\vec{s}$ that is either optimal or an approximation to the optimal solution. This enables embodiments of the present invention to eliminate $\vec{s}$ from the optimization problem and to formulate the optimization as a polynomial unconstrained binary optimization (PUBO) problem.

An algorithm similar to some extent, called Simulated Bifurcation, can be found in H. Goto, K. Tatsumura, A. R. Dixon Combinatorial optimization by simulating adiabatic bifurcations in nonlinear Hamiltonian systems, DOI: 10.1126/sciadv.aav2372.

**The summary of the invention**

The invention is generating randomly (using (aRNG - Quantum Random Number Generator) a set of different initial states. Then, these states are evaluated (evolved) over time using a dedicated algorithm using graphics processors. At the end of evolution (in the steady state), the state with the lowest energy is selected, which is the solution proposed by the solver.

In particular, the invention provides a solver, which utilizes the encoding of the basic state of the Ising / QUBO model in the steady state of a dynamic physical process. The dynamic process is governed by a system of differential equations with $2 * N$ variables, where $N$ is the number of optimization variables of the original QUBO / Ising model. According to the invention, the system of differential equations describing the dynamic system is established to distinguish two phases of operation:

1. mixing of variables based on the matrix of connections between them and
2. updating of target and auxiliary variables. Both of these phases have been designed to optimize memory usage and can be performed entirely on a parallel architecture (e.g. graphics processor).

This procedure allows the main complexity of the algorithm to be concentrated in the optimal procedure, which performs matrix multiplication. It also allows the solver to use different matrix multiplication procedures depending on the characteristics of the original problem (e.g. sparsity of matrices).

According to the invention, the solution differed from the prior art solvers in that:

1. The solver of the invention uses a quantum random number generator to generate the initial states of the dynamic system, which are then transferred to the graphics processor (GPU) and solved using it.

2. The solver has an ability to calculate multiple trajectories of a dynamic process in parallel. In the first phase, a function is used for this purpose that allows matrix multiplication to be performed optimally for a given architecture.

The effects of the invention are in particular by a specific grouping of trajectories and storing them in aggregated variables. Instead of solving, for example, 10 systems of differential equations, each of which has 5 variables, the optimization problem can be written in such a way as to solve 1 system of differential equations with 50 variables.

The effects of the invention also allow performing computation in batches. For instances, one can solve $K$ small problems, each having $N$ trajectories and $L$ variables, in a single run of the algorithm.

**Notation**

Throughout the application, mathematical variables have the following meaning:

1. $L$ - number of (optimization) variable,

2. $N$ - number of (independent) trajectories,

3. $M$ - total number of steps to take by the solver,

4. $\delta t$ - time step used in discretization (and evolution),

5. $J_{ij}$ - couplings between variables $i$ and $j$ (the adjacency matrix),

6. $h_i$ - magnetic fields (the biases),

7. $x_{ij}$ - (global) variable storing position of $i$-th "spin" and for $j$-th trajectory,

8. $y_{ij}$ - global, auxiliary, variable for $i$-th "spin" and for $j$-th trajectory,

9. $\Phi_{ij}$ - global, auxiliary, variable $i$-th "spin" and for $j$-th trajectory,

10. $z, w$ - (local) variable storing intermediate results of calculations,

11. $\xi, \Delta, \gamma, C$ - solver's parameters that are chosen before the system start evolving.

**Solver's steps** - **the main algorithm**

The effects of the invention are achieved by performing the following steps.

1. Initialize $-1 \leq x_{ij} \leq 1$ using **quantum random number generator** (QRNG), for all $1 \leq i \leq L$, and all $1 \leq j \leq N$.
2. Set $y_{ij} = 0$ for all $1 \leq i \leq L$, and all $1 \leq j \leq N$.
3. Prepare the Ising system: rescale each $J_{ij}$, and $h_i$ by $1/\max(|J_{ij}|, |h_i|)$.
4. Prepare $\xi, \Delta, \gamma, \delta t$ and $C$ by using the values specified by the user or computed by eternal module.
5. Rescale $\xi, \Delta, \gamma$, and $C$ by $\delta t$.
6. Evolve the system one step ahead.
7. Mix variables $x_{ij}$ for all $1 \leq i \leq L$, and all $1 \leq j \leq N$.
8. Continue evolution until the total number of steps, $M$ is reached, in which case exit.
9. On exit: Discretize final states: set $x_{ij} = \text{sgn}(x_{ij})$ for all $1 \leq i \leq L$, and all $1 \leq j \leq N$.
10. On exit: Compute and sort vector of Ising energies, $E$.

Energies are computed as follows

$$E = x \, . * \, (\frac{1}{2} \, . + \, J * x \, . + \, h) + \beta, \qquad (1)$$

where .+, and .* denote array broadcasting, * matrix-matrix multiplications, whereas $x = [x_{ij}], J = [J_{nm}], h = [h_i]$ are matrices of sizes $N \times L, L \times L$, and $1 \times L$, respectively. Here, $\beta$ is a predefined constant (offset), which by default is set to zero ($\beta = 0$). Note, $E$ can be sorted using any sorting algorithm.

**Definition of the annealing schedule**

Given the time step, $\delta t$, and the time-dependent pump function, $f(t)$, we set the schedule, $S$ as:

$$S = (\Delta \, . - \, f.(\delta t \, . * \, [0, ...., M-1])) \, . * \, \delta t, \qquad (2)$$

where $.+$, and $.*$ denote array broadcasting and the function $f$ is evaluated element-wise [which is denoted by $f.()$]. Note that $f(t)$ can be defined by the user arbitrarily. For instance, the pump function can be chosen as

$$f(t) = t/M/\alpha/\delta t. \qquad (3)$$

where $\alpha$ is a predefined (real) parameter.

**Algorithm evolving the system one step in time**

The following are performed in parallel over all variables (indexed by $i$) and trajectories (indexed by $j$). Local variables (not indexed at all) are created for each thread separately. Here, $1 \leq i \leq L$ and $1 \leq j \leq N$. For a given schedule $S$ and $p \in S$, we have

1. Read parameters $C$, $\xi$, and $\gamma$.
2. Set, $z = x_{ij}$ and $w = y_{ij} \cdot (1 + \gamma)$ for all $1 \leq i \leq L$, and all $1 \leq j \leq N$.
3. Set $w = w - (C \cdot z \cdot z + p) \cdot z + \xi \cdot (\Phi_{ij} + h_i)$, for all $1 \leq i \leq L$, and all $1 \leq j \leq N$.
4. Set $z = z + \Delta \cdot w$.
5. If $|z| > 1$ set $z = \text{sgn}(z)$ and $w = 0$.
6. Put back local variables to the global memory: $x_{ij} = z$ and $y_{ij} = w$ for all $1 \leq i \leq L$, and all $1 \leq j \leq N$.

**Algorithm for mixing variables**

Let $x = [x_{ij}]$, $\Phi = [\Phi_{ij}]$, and $J = [J_{nm}]$ then, after the system has been evolved, we mixed the variables $x_{ij}$ by setting

$$\Phi = J * x \quad \text{or} \quad \Phi = J * \text{sgn}(x), \qquad (4)$$

depending on a predefined user's choice. Here, $*$ denotes matrix-matrix multiplications. Note $x$ and $\Phi$ are of size $N \times L$ and $J$ of size $L \times L$.

Note, for computational efficiency, $J$ and $\Phi$ is stored using single-precision floating-point format (FP32) whereas $x$ half-precision floating-point format (FP16). Thus, the operation $*$ is carried out using mixed single-precision matrix-matrix multiplications. Note, if the original optimization problem defined is sparse so is the matrix $J$ and thus $*$ denotes sparse-dense matrix-matrix multiplications.

**Embodiments**

In practice, the Ising system, *i.e.* $(J, h)$, can encode a variety of optimization problems, which then can be solved by our algorithm. For instance, the well-known Traveling Salesman Problem (TSP), cf.,

1. T. Zhang, J. Han, Efficient Traveling Salesman Problem Solvers using the Ising Model with Simulated Bifurcation, DOI: 10.23919/DATE54114.2022.977-4576.

The main algorithm, describe above, can be executed separately on different Graphics Processing Units (GPUs). Final results can be combined (then the smallest energies found over all GPUs are returned).

In an embodiment, instead of QRNG, classical (pseudo) random generator can also be used in our algorithm. In one of the examples, the random number generator manufactured by Sequre (https://www.sequre-quantum.com/) was used. However, the solution of the invention is general and can be connected to any device of this type, or any other source of randomness.

In one of the embodiments, the *gemm* functions from the *cublas* library were used. However, the solution according to the invention is general and can be "connected" to any type of gemm (general matrix-matrix multiplication).

In another embodiment, Nvidia graphics cards were used for GPU computations. However, the solution according to the invention is so general that it can be implemented on any similar (i.e. massively parallel) classical infrastructure.

**Claims**

1. A method of solving discrete optimization problems encoded using the Ising model

   (a) Initialize $-1 \leq x_{ij} \leq 1$ using **random number generator** (RNG), for all $1 \leq i \leq L,$ and all $1 \leq j \leq N.$
   (b) Set $y_{ij} = 0$ for all $1 \leq i \leq L,$ and all $1 \leq j \leq N.$
   (c) Prepare the Ising system: rescale each $J_{ij}$, and $h_i$ by $1/\max(|J_{ij}|, |h_i|)$.
   (d) Prepare $\xi, \Delta, \gamma, \delta t$ and $C$ by using the values specified by the user or computed by eternal module.
   (e) Rescale $\xi, \Delta, \gamma,$ and $C$ by $\delta t.$
   (f) Evolve the system one step ahead.
   (g) Mix variables $x_{ij}$ for all $1 \leq i \leq L,$ and all $1 \leq j \leq N.$
   (h) Continue evolution until the total number of steps, $M$ is reached, in which case exit.
   (i) On exit: Discretize final states: set $x_{ij} = \mathrm{sgn}(x_{ij})$ for all $1 \leq i \leq L,$ and all $1 \leq j \leq N.$
   (j) On exit: Compute and sort vector of Ising energies, $E,$

   wherein the energies are computed as follows

   $$E = x \, . \ast \, \left(\frac{1}{2} \, . + \, J \ast x \, . + \, h\right) + \beta,$$

   where $.+,$ and $.\ast$ denote array broadcasting, $\ast$ matrix-matrix multiplications, whereas $x = [x_{ij}], J = [J_{nm}], h = [h_i],$ wherein $\beta$ is a predefined constant (offset), which by default is set to zero ($\beta = 0$), and wherein $E$ can be sorted using any sorting algorithm.

2. The method of claim 1 **characterized in that** the system evolution step (f), which is performed in parallel over all variables (indexed by $i$) and trajectories (indexed by $j$), wherein local variables (not indexed at all) are created for each thread separately, and $1 \leq i \leq L$ and $1 \leq j \leq N,$ and for a given schedule $S$ and $p \in S,$ comprises the following:

   (a) Read parameters $C, \xi,$ and $\gamma.$
   (b) Set, $z = x_{ij}$ and $w = y_{ij} \, . \, (1 + \gamma)$ for all $1 \leq i \leq L,$ and all $1 \leq j \leq N.$
   (c) Set $w = w - (C \cdot z \cdot z + p) \cdot z + \xi \cdot (\Phi_{ij} + h_i),$ for all $1 \leq i \leq L,$ and all $1 \leq j \leq N.$
   (d) Set $z = z + \Delta \cdot w.$
   (e) If $|z| > 1$ set $z = \mathrm{sgn}(z)$ and $w = 0.$
   (f) Put back local variables to the global memory: $x_{ij} = z$ and $y_{ij} = w$ for all $1 \leq i \leq L,$ and all $1 \leq j \leq N,$

   wherein the annealing schedule $S$ given the time step, $\delta t,$ and the time-dependent pump function, $f(t),$ is set as:

   $$S = \left(\Delta \, . - \, f.(\delta t \, . \ast \, [0, ...., M - 1])\right) \, . \ast \, \delta t,$$

   where $.+,$ and $.\ast$ denote array broadcasting and the function $f$ is evaluated element-wise [which is denoted by $f.()$], and $f(t)$ can be defined by the user arbitrarily.

3. The method of claim 2 **characterized in that** the pump function is

   $$f(t) = t/M/\alpha/\delta t.$$

   where $\alpha$ is a predefined (real) parameter.

4. The method of any of the claims 1 - 3 **characterized in that** the **random number generator** (RNG) is a **quantum random number generator** (QRNG).

5. The method of any of the claims 1-4 **characterized in that** computation is performed on a Graphics Processing Unit (GPU).

6. The method of any of the claims 1-4 **characterized in that** computation is performed on a Quantum Processing Unit (QPU).

7. A solver for solving discrete optimization problems performing the method of claims 1-6.

Europäisches
Patentamt

European
Patent Office

Office européen
des brevets

## EUROPEAN SEARCH REPORT

Application Number

EP 23 22 0192

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Hayato Goto ET AL: "Combinatorial optimization by simulating adiabatic bifurcations in nonlinear Hamiltonian systems", Science Advances, 19 April 2019 (2019-04-19), pages 1-8, XP055715980, DOI: 10.1126/sciadv.aav2372 Retrieved from the Internet: URL:https://advances.sciencemag.org/content/5/4/eaav2372.full.pdf [retrieved on 2020-07-17] * abstract; figure 3 * * INTRODUCTION * * RESULTS * | 1-7 | INV. G06N5/01 |
| X | GOTO HAYATO ET AL: "Supplementary Materials for Combinatorial optimization by simulating adiabatic bifurcations in nonlinear Hamiltonian systems", SCIENCE ADVANCES, vol. 5, no. 4, 19 April 2019 (2019-04-19), XP055825536, DOI: 10.1126/sciadv.aav2372 Retrieved from the Internet: URL:https://advances.sciencemag.org/content/advances/suppl/2019/04/12/5.4.eaav2372.DC1/aav2372_SM.pdf> * Solving MAX-CUT with Ising machines * * Eight-GPU implementation of SB and SA for M10000 * | 1-7 | |

TECHNICAL FIELDS
SEARCHED (IPC)

G06N

The present search report has been drawn up for all claims

| Place of search | Date of completion of the search | Examiner |
|---|---|---|
| The Hague | 4 June 2024 | De Meyer, Arnaud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4290416 A1

- EP 4055533 A1

**Non-patent literature cited in the description**

- **H. GOTO** ; **K. TATSUMURA** ; **A. R. DIXON**. *Combinatorial optimization by simulating adiabatic bifurcations in nonlinear Hamiltonian systems*

- **T. ZHANG** ; **J. HAN**. *Efficient Traveling Salesman Problem Solvers using the Ising Model with Simulated Bifurcation*